# EUROPEAN PATENT APPLICATION

(11) **EP 3 042 967 A1**
(43) Date of publication of application: **13.07.2016**
(21) Application number: 15000022.2
(22) Date of filing: 08.01.2015
(51) Int. Cl.: C21D 1/74, B22F 3/10, C21D 1/76, F27D 7/00, F27D 7/06, F27B 9/04

(54) **Gas mixture and method for controlling a carbon potential of a furnace atmosphere**

(71) Applicant: Linde Aktiengesellschaft, 80331 München (DE)
(72) Inventor: Akin, Malas, 85757 Karlsfeld (DE)
(74) Representative: Gellner, Bernd

(57) **Abstract**

The invention relates to a gas mixture (171) for controlling a carbon potential of a furnace atmosphere (172), the gas mixture (171) comprising nitrogen (N2), carbon monoxide (CO) and at least one of nitrous oxide (N2O) and hydrogen (H2), to a use of such a gas mixture, a method of controlling a carbon potential of a furnace atmosphere (172) and to a method of sintering metal injection molding parts (180, 181).

## Description

The present invention relates to a gas mixture for controlling a carbon potential of a furnace atmosphere, to a corresponding use of such a gas mixture, particularly for sintering metal injection molding parts, to a method of controlling a carbon potential of a furnace atmosphere and to a method of sintering metal injection molding parts in a furnace atmosphere.

### Prior art

Metal injection molding is a process for forming parts from metal powder mixed with binder material. The mixture of metal powder and binder material is pressed into forms. Afterwards, the binder material is removed using, for example a solvent, a thermal treatment, a catalytic process, or a combination thereof.

The result of this process is a metal part that has to be further densified by using a furnace process called sintering. In that furnace process, a furnace atmosphere is used to control the reactions taking place on the surface of the metal part. Reactions within the furnace atmosphere may be controlled by changing the compositions of the furnace atmosphere.

Using air or carbon dioxide (CO2) is a common practice for reducing the carbon potential of the furnace atmosphere. These gases act very quickly in high temperature sintering of metal injection molding (MIM) parts causing the accumulated soot to be dissolved as carbon monoxide (CO). Thus, the use of these gases, however, first results in an increase of the carbon potential rather than a decrease. Then, the time to recover from this increase and to achieve a decreasing trend for the carbon potential usually is very long.

Thus, the problem to be solved is to reduce the risk of increasing the carbon potential in a furnace atmosphere, particularly in a furnace atmosphere for sintering metal injection molding parts.

### Disclosure of the invention

The problem is solved by a gas mixture, a use of such a gas mixture, a method of controlling a carbon potential of a furnace atmosphere and a method of sintering according to the independent claims. Advantageous embodiments are the subject of the dependent claims as well as of the following description.

### Advantages of the invention

A gas mixture according to the present invention serves for controlling a carbon potential of a furnace atmosphere. The gas mixture comprises nitrogen, carbon monoxide and at least one of nitrous oxide and hydrogen. In particular the gas mixture consists of these components.

In this gas mixture, nitrogen is used as a carrier gas for the active constituents and carbon monoxide is used as a carbon containing enrichment agent. With carbon monoxide the available carbon in the atmosphere can be activated and uniformity of the furnace atmosphere can be provided to achieve a neutral or a carburising atmosphere. In metal injection molding sintering, for example, at temperatures above 1250°C carbon monoxide acts as an enrichment gas and thus is an active source of carbon.

Nitrous oxide is used as an active oxidising agent that helps provide a decarburising effect in the atmosphere. Due to its chemical structure it acts slower and thus provides a more stable atmosphere and does not drastically change the conditions within the furnace.

The advantage of such a gas mixture is that it slows down the activities in the furnace atmosphere and hence prevents the soot to be active immediately. This results in decreasing the risk of carbon potential increases for furnaces like metal injection molding sintering furnaces. Further, undesirable parts or scrap produced during the initial carbon potential increase caused by using air or carbon dioxide can be eliminated.

Preferably, the gas mixture consists of nitrogen, carbon monoxide, nitrous oxide and hydrogen. Hydrogen as an agent may be used in combination with nitrous oxide or Hydrogen can be used also to replace nitrous oxide, improving the decarburising effect. For example, hydrogen may be used when the power of the nitrous oxide is not strong enough in certain cases in which a very quick response is necessary or desired.

Advantageously, the hydrogen is present in the form of humidified hydrogen. This improves the effect of hydrogen as a decarburising agent.

A preferred use of a gas mixture according to the invention is its use for controlling a carbon potential of a furnace atmosphere with the nitrous oxide preferably being present in a concentration of less than or equal to one percent of the furnace atmosphere and of the actual furnace flow rate, respectively. Advantageously, the hydrogen, if used, is present in a concentration of less than or equal to ten percent of the furnace atmosphere and of the actual furnace flow rate, respectively. These concentrations turned out to be best suited for controlling the carbon potential effectively.

It is of advantage if the gas mixture is used for controlling a carbon potential of a furnace atmosphere in a continuous furnace with the nitrogen being present in a concentration of less than or equal to ten percent of the gas. The use of continuous furnaces is of advantage, for example, for mass production.

Alternatively, the gas mixture is used for controlling a carbon potential of a furnace atmosphere in a batch furnace with the nitrogen being present in a concentration of less than or equal to fifty percent of the gas mixture. The use of batch furnaces is of advantage, for example, because they are flexible with regard to sintering cycles.

A further preferred use of a gas mixture according to the invention is its use for controlling a carbon potential of a furnace atmosphere for sintering metal injection molding parts.

A method according to the invention serves for controlling a carbon potential of a furnace atmosphere. Nitrogen, carbon monoxide and at least one of nitrous oxide and hydrogen forming at least part of a gas mixture are supplied to the furnace atmosphere, wherein the nitrous oxide, if being supplied, is supplied in a concentration of less than or equal to one percent of the furnace atmosphere and wherein the hydrogen, if being supplied, is supplied in concentration of less than or equal to ten percent of the furnace atmosphere.

Preferably, nitrous oxide and hydrogen are supplied to the furnace atmosphere.

Advantageously, the hydrogen is humidified before being supplied to the furnace atmosphere.

A further method according to the invention serves for sintering metal injection molding parts in a furnace atmosphere including controlling a carbon potential of the furnace atmosphere according to the present invention.

Further embodiments and advantages of the method according to the invention correspond to the embodiments and advantages of the gas mixture and its use according to the invention mentioned above. Thus, in this respect, it is referred to the statements above in order to avoid repetition.

### Description of the drawing

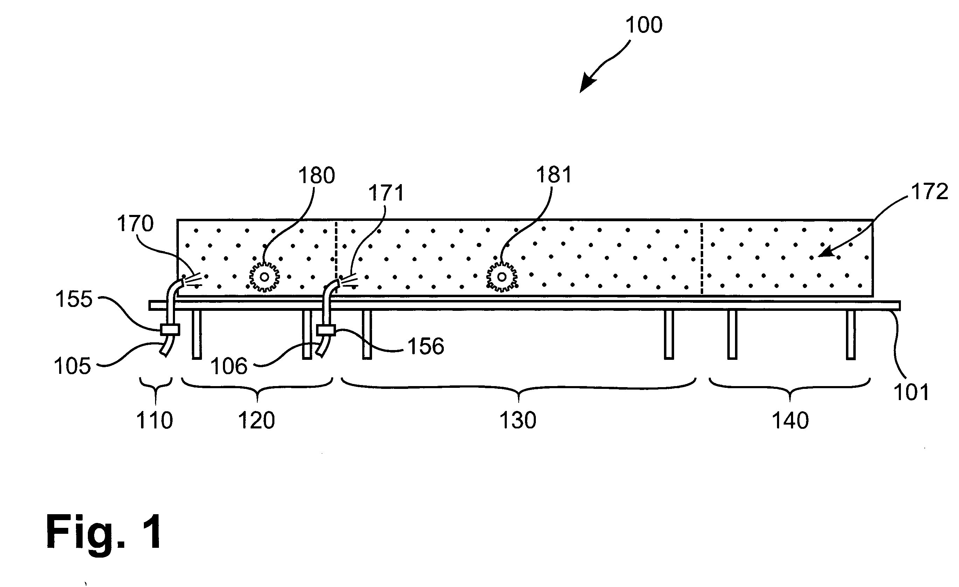

- Fig.1: shows a sintering furnace which may be used with a gas mixture and a method according to the invention in a preferred embodiment.

### Embodiment of the invention

In Fig. 1, a schematical drawing of a sintering furnace 100 in the form of a continuous furnace, for example for sintering metal injection molding parts, is shown. Parts 180, 181 are placed on a bench 101 after metal injection molding and transported, e.g. by a conveyor, from the left end of the bench 101 to the right end of the bench 101.

Parts 180, 181, which are exemplarily shown in the sintering furnace 100, thus pass different zones of the sintering furnace 100. These zones may comprise an entry zone 110 at the beginning, followed by a pre-heating zone 120, a high heat zone 130 and a cooling zone 140 at the end.

Two exemplary gas inlets 105, 106 are connected to the sintering furnace 100. These gas inlets 105, 106 allow supplying gas or a gas mixture 170, 171 to the furnace. A flow of the gas or gas mixture 170, 171 may be controlled by adjusting means 155, 156 placed at inlets 105, 106.

In this example, the gas mixture 171 is used to control a carbon potential of a furnace atmosphere 172 for a sintering process taking place in the furnace 100. In a preferred embodiment, the gas mixture 171 consists of nitrogen, carbon monoxide, nitrous oxide and humidified hydrogen.

The nitrous oxide is present in a concentration of less than or equal to one percent, preferably 0.4 % of the gas mixture 171 and the hydrogen is present in a concentration of less than or equal to ten percent, preferably 8% of the gas mixture 171. Since the furnace 100 shown is a continuous furnace, the nitrogen is present in a concentration of less than or equal to ten percent of the furnace atmosphere 170 and of the main furnace flowrate, respectively.

In the gas mixture 171, nitrogen is used as a carrier gas for the active constituents and carbon monoxide is used as a carbon containing enrichment agent. With carbon monoxide the available carbon in the furnace atmosphere 172 can be activated and uniformity of the furnace atmosphere 172 can be provided to achieve a neutral or a carburising atmosphere. In metal injection molding sintering at temperatures above 1250°C, carbon monoxide acts as an enrichment gas an thus is an active source of carbon.

Nitrous oxide is used as an oxidising agent and together with humidified hydrogen it helps provide a decarburising effect in the furnace atmosphere 172. Due to its chemical structure it acts slower and thus provides a more stable furnace atmosphere 170 and does not drastically change the conditions within the furnace 100.

The main advantage of this gas mixture 171 is that it slows down the activities in the furnace atmosphere 172 in the furnace 100 and hence prevents any accumulated soot to be active in the form of dissolved CO2 immediately. This results in decreasing the risk of carbon potential increases.

## Claims

1. Gas mixture (171) for controlling a carbon potential of a furnace atmosphere (172), the gas mixture (171) comprising nitrogen (N2), carbon monoxide (CO) and at least one of nitrous oxide (N2O) and hydrogen (H2).

2. Gas mixture (171) according to claim 1, the gas mixture consisting of nitrogen (N2), carbon monoxide (CO) and at least one of nitrous oxide (N2O) and hydrogen (H2).

3. Gas mixture (171) according to claim 1, the gas mixture consisting of nitrogen (N2), carbon monoxide (CO), nitrous oxide (N2O) and hydrogen (H2).

4. Gas mixture (171) according to anyone of the preceding claims, the hydrogen (H2) being present in the form of humidified hydrogen (H2).

5. Use of a gas mixture (171) according to anyone of the preceding claims for controlling a carbon potential of a furnace atmosphere (172).

6. Use of a gas mixture (171) according to claim 5, the nitrous oxide (N2O) being present in a concentration of less than or equal to one percent of the furnace atmosphere (172).

7. Use of a gas mixture (171) according to claim 5 or 6, the hydrogen (H2) being present in a concentration of less than or equal to ten percent of the furnace atmosphere (172).

8. Use of a gas mixture (171) according to anyone of claims 5 to 7 in a continuous furnace, the nitrogen (N2) being present in a concentration of less than or equal to ten percent of the furnace atmosphere (172).

9. Gas mixture (171) according to anyone of claims 5 to 7 in a batch furnace, the nitrogen (N2) being present in a concentration of less than or equal to fifty percent of the furnace atmosphere (172).

10. Use of a gas mixture (171) according to anyone of claims 5 to 9 for controlling a carbon potential of a furnace atmosphere (172) for sintering metal injection molding parts (180, 181).

11. Method of controlling a carbon potential of a furnace atmosphere (172), wherein nitrogen (N2), carbon monoxide (CO) and at least one of nitrous oxide (N20) and hydrogen (H2) forming at least part of a gas mixture (171) are supplied to the furnace atmosphere (170), wherein the nitrous oxide (N20), if being supplied, is supplied in a concentration of less than or equal to one percent of the furnace atmosphere (172), and wherein the hydrogen (H2), if being supplied, is supplied in a concentration of less than or equal to ten percent of the furnace atmosphere (172).

12. Method according to claim 11, wherein nitrous oxide (N20) and hydrogen (H2) are supplied to the furnace atmosphere (170).

13. Method according to claim 11 or 12, wherein the hydrogen (H2) is humidified before being supplied to the furnace atmosphere (172).

14. Method according to anyone of claims 11 to 13, wherein the gas mixture (171) is supplied to a furnace atmosphere (172) of a continuous furnace, wherein the nitrogen (N2) is supplied in a concentration of less than or equal to ten percent of the furnace atmosphere (172).

15. Method according to anyone of claims 11 to 13, wherein the gas mixture (171) is supplied to a furnace atmosphere (172) of a batch furnace, wherein the nitrogen (N2) is supplied in a concentration of less than or equal to fifty percent of the furnace atmosphere (172).

16. Method of sintering metal injection molding parts (180, 181) in a furnace atmosphere (172), wherein a carbon potential of the furnace atmosphere (172) is controlled according to a method according to anyone of claims 11 to 15.
